# EUROPEAN PATENT SPECIFICATION

(11) **EP 2 767 118 B1**
(45) Date of publication and mention of the grant of the patent: **06.04.2016**
(21) Application number: 11752561.8
(22) Date of filing: 09.09.2011
(51) Int. Cl.: H04W 36/00

(54) **MEASUREMENT CONFIGURATION MAP FOR MEASUREMENT EVENT REPORTING IN CELLULAR COMMUNICATIONS NETWORK**
MESSKONFIGURATIONSKARTE FÜR MESSEREIGNISBERICHTERSTATTUNG IN MOBILFUNKNETZEN
CARTE DE CONFIGURATION DE MESURE POUR LE SIGNALEMENT D'ÉVÉNEMENTS DE MESURE DANS UN RÉSEAU DE COMMUNICATION CELLULAIRE

(43) Date of publication of application: 20.08.2014
(73) Proprietor: Nokia Solutions and Networks Oy, 02610 Espoo (FI)
(72) Inventor: WEGMANN, Bernhard, 83607 Holzkirchen (DE); WALDHAUSER, Richard, 81249 München (DE); ZIRWAS, Wolfgang, 81249 München (DE)
(74) Representative: Borgström, Markus
(86) International application number: PCT/EP2011/065589
(87) International publication number: WO 2013/034191

(56) References cited:
- WO-A1-2011/053534
- US-A- 6 138 021
- US-A1- 2008 096 560
- HUAWEI: "Neighbour cell reduction using LCV", 3GPP DRAFT; R2-071785, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kobe, Japan; 20070504, 4 May 2007 (2007-05-04), XP050134687, [retrieved on 2007-05-04]
- ALCATEL-LUCENT: "Definition and prevention of handover to wrong cell", 3GPP DRAFT; R3-091848, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090820, 20 August 2009 (2009-08-20), XP050353216, [retrieved on 2009-08-20]

## Description

### BACKGROUND OF THE INVENTION

### Field of the invention

The present invention relates to mobile radio communications with focus on SON and in particular MRO. In particular, the present invention relates to generating and using a measurement configuration map for measurement event reporting by a user equipment in a cellular communications network.

### Related background art

Prior art which is related to this technical field can e.g. be found in:
[1] TDoc, R3-091848, "Definition and prevention of handover to wrong cell", Alcatel-Lucent, 3GPP TSG-RAN WG3#65, August 2009, Shenzhen, China;
[2] TDoc, R2-070493, "Neighbor cell list reduction", Huawei, 3GPP TSG-RAN WG2#57, Feb. 2007, St. Louis, USA;
[3] TDoc, R2-071785, "Neighbor cell reduction using LCV", Huawei, 3GPP TSG-RAN WG2#58, May 2007, Kobe, Japan; and
[4] TDoc, R2-111764, "Necessary changes for RLF reporting enhancements", NTT Docomo, 3GPP TSG-RAN WG2#73, Feb. 2011, Taipei, Taiwan.

US 20080096560 relates to radio communications and in particular to handovers between networks. It discloses a mechanism whereby handovers from one network to another are facilitated by the use of a contextual information relating to a user device and its operating environment. Based on this information, a decision to handover the device is determined.

The following meanings for the abbreviations used in this specification apply:
- SON: self optimizing network
- MRO: mobility robustness optimization
- 3GPP: third generation partnership project
- E-UTRA: evolved universal terrestrial radio access
- PM: performance management
- RLF: radio link failure
- HO: handover
- HOF: handover failue
- RCA: root cause analysis
- RAT: radio access technology
- LTE: long term evolution
- CIO: cell individual offset
- UE: user equipment
- TTT: time to trigger
- KPI: key performance indicator
- RAN: radio access network
- eNB: evolved node B
- RSRP: reference signal received power
- RSRQ: reference signal received quality
- GNSS: global navigation satellite system
- IE: information element
- BCH: broadcast channel
- ID: identification
- GPS: global positioning system
- UMTS: universal mobile telecommunications system
- RF: radio frequency
- RRC: radio resource control

SON has become a standard relevant aspect with 3GPP Rel 8 (standardization of E-UTRA) and is now also extended towards existing 2G or 3G technologies.

Conventionally, optimization of network configuration parameters in 2G or 3G networks is based on labor- and cost-intensive drive testing. For the first roll-out, network-wide default configuration parameters are used and if PM counters are accumulating RLFs or even call drops in certain service areas, several optimization loops with drive testing are started to adapt parameters in a cell-specific manner.

The target of MRO is to automate the optimization of those network configuration parameters which are triggering a handover (e.g. event thresholds, timers, etc.) such that RLFs and HOFs are reduced. The MRO procedure includes two phases:
- RCA phase, where cell or cell-pair specific KPI statistics are generated, and
- correction phase, where measurement parameters triggering an HO are adjusted.

In a conventional communications network, a cell change of a UE is triggered by a measurement event reported by the UE, and the measurement event in turn is triggered when certain conditions with respect to defined measurement objects on UE side are fulfilled.

In particular, an intra-RAT / intra-frequency cell change seeking for a better serving cell is normally triggered by a measurement event based on a relative signal comparison. For instance, in case of intra-LTE handover, a measurement event A3 is used indicating that a neighbor cell becomes "A3-offset" better than a current serving cell. It is to be noted that there are a plurality of measurement events that may trigger a handover. For instance, an inter-RAT HO normally is triggered by a measurement event comprising two thresholds which have to be fulfilled, one belonging to a serving cell of RAT A and one belonging to a neighboring or overlaying cell of RAT B. In case of LTE, this measurement event is called B2 and is defined as follows:
Inter-RAT trigger event B2:
   Serving becomes worse than B2_threshold_1
   && inter-RAT neighbor becomes better than B2_threshold_2.

It is to be noted that this measurement event is only an example.

Due to irregular and heterogeneous cell layouts as well as inhomogeneous traffic distribution and user mobility one single network-wide measurement configuration for handover fails and therefore cell-specific configuration is required. This cell-specific configuration comprises a measurement event parameter adaptation and is conventionally done during the network optimization phase based on costly and labor-intensive drive measurements and PM counter evaluation.

With SON and MRO this high human intervention is more or less completely eliminated. The MRO algorithm is running in an automated and autonomous manner to determine optimal measurement event thresholds, offsets or timers for each cell. For intra-LTE mobility, the thresholds can even be determined cell-pair specific by means of dedicated CIOs. And there is even another means to refine the triggering of the measurement event reporting dependent on UE velocity, namely a UE velocity adaptive TTT setting.

Nevertheless, there are still some problematic cases where the cell specific or even cell-pair specific measurement configuration is not accurate enough. For instance, in LTE the inter-RAT measurement object for UTRAN does not provide cell individual offsets for listed neighbor cells, i.e. there is no means to configure different measurement event parameters (here B2) for different neighbors. Furthermore, when regarding only one cell pair, one single measurement event - this concerns now also the intra-LTE case where neighbors can be cell individually parameterized - cannot comply with different requirements of various cell borders.

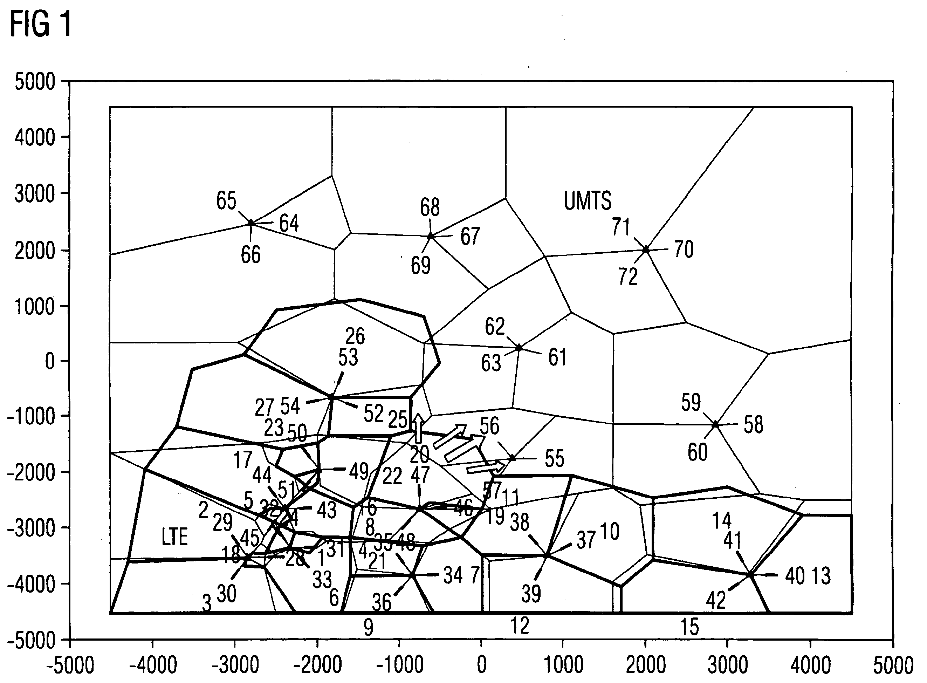

Referring to Fig. 1, various arrows illustrate this situation. For example, users connected to LTE cell 20 may either handover to UMTS cell 52, 56 or 57, and a radio link condition can considerably vary for these three different cell borders. However, they all are subjected to the same handover trigger mechanism. In addition, different user mobility may occur at the different cell borders. But it is to be noted that this problem is not restricted to handovers to different cells. Even handovers to the same cell but at a different location may underlie rather different radio conditions and require different handover trigger mechanisms as indicated by different thickness of the arrows for handover from LTE cell 20 to UMTS cell 56 in Fig. 1. These location specific differences of radio conditions within one cell pair are also occurring for the intra-LTE use case where handovers to different neighbors are already distinguishable by different CIOs.

As mentioned above, current MRO algorithms are optimizing the corresponding parameters cell-specifically or cell-pair specifically based on KPI statistics showing the probability of occurrence of specified failure types (e.g. RLF due to too late handover). The failures are accumulated for a complete cell or per cell-pair in the intra-LTE case. The optimization either complies with the most dominating failure type or tries to find a compromise. In both cases, either due to averaging over all locations or due to preferring certain failures/locations, many problems are not detected and mitigated.

The problem that UEs are facing different problems depending on its location is discussed in document [1] which is concerned with detection and prevention of a failure type "Handover to wrong cell" as well as an RLF-free use case "choice of wrong cell resulting in short visit time". In order to combine the detected failure type with location information the proposed solution according to document [1] envisions that UE location information is sent to a target eNB in a handover request message. Based on that the target eNB learns to assign failures to UE locations and informs - probably after a while when statistical significance is given - a source eNB with so-called "mobility feedback information" transmitted in a handover preparation response message or handover preparation failure message "indicating that the cell is not a preferred candidate cell for the given UE, and optionally providing information of the recommended cell". Based on this "mobility feedback information" the source eNB also learns critical locations of UEs reporting HO trigger events to specific target cells. Based on this learned information, the source eNB can decide not to follow given measurement information but to send a handover preparation request directly to a different eNB recommended by the "mobility feedback information". Even if the CIO is not directly adapted it can be interpreted as being so.

With respect to location dependent information it is proposed in document [1] that it can be based on measurements (RSRP or RSRQ) of all detected neighbor cells or at least on such neighbor cells for which a certain threshold has been reached. Other alternatives are a ranking of available strongest neighbor cells, or UE coordinates based on GNSS data if available.

Document [1] proposes to add the location information as IE to the handover request message and corresponding feedback to HO preparation messages via X2 interface and transparent containers via S1 interface.

However, the proposal of document [1] has two considerable disadvantages:
1. It covers only the failure type "handover to wrong cell", since it is required that UE location information is provided with the handover preparation procedure. This is not available for "Too late handover" where the RLF happens before the handover has been triggered.
2. Measurement configuration on UE side is not adapted but will be differently interpreted by eNB depending on the UE location information during the handover preparation. This has the disadvantages that it is also applicable for "too early handover" problems and that it may lead to many event reports in vain in case of "too early handover".

In documents [2] and [3] for neighbor cell list reduction purposes it is proposed to broadcast geographical coordinates of a coverage of each cell or logical cell values and a predefined pattern which reduces required signaling effort. The proposed method introduces geographical substructures dividing cells in regions depending on their shape and the shape of the neighbor cells.

### SUMMARY OF THE INVENTION

The present invention aims at solving the above problems.

According to the present invention, methods and apparatuses are provided as set out in the appended claims, which refine and improve the measurement configuration in context of the MRO procedure. The invention may also be implemented by a computer program product.

According to an embodiment of the invention, a location dependent measurement reporting configuration for event based mobility triggering is proposed. For this purpose, a location specific measurement configuration map is provided for measurement event reporting by a user equipment in a cellular communications network. The location specific measurement configuration map may also be speed specific.

### BRIEF DESCRIPTION OF THE DRAWINGS

Fig. 1 shows a diagram illustrating cells of two RATs, in which different user mobility results in different target inter-RAT cells.
Fig. 2 shows a schematic block diagram illustrating structures of control units of a user equipment and network node(s) according to an embodiment of the invention.
Fig. 3 shows a diagram illustrating a measurement configuration map according to an embodiment of the invention.
Figs. 4A and 4B show flow charts illustrating a process of reporting a measurement event and a process of generating a location specific measurement configuration map according to an embodiment of the invention.
Fig. 5 shows a diagram illustrating location specific KPI statistics based on which a location specific measurement configuration map is generated/updated according to an embodiment of the invention.

### DESCRIPTION OF PREFERRED EMBODIMENTS

In the following embodiments of the invention will be described with reference to the accompanying drawings. It is to be noted that the invention is neither coupled to a specific measurement event nor to a specific RAT or inter-RAT scenario. An LTE case or LTE-UMTS inter-RAT case may be considered, however, the invention can be applied to any RAT or INTER-RAT scenario. In addition, the invention is applicable to any measurement event.

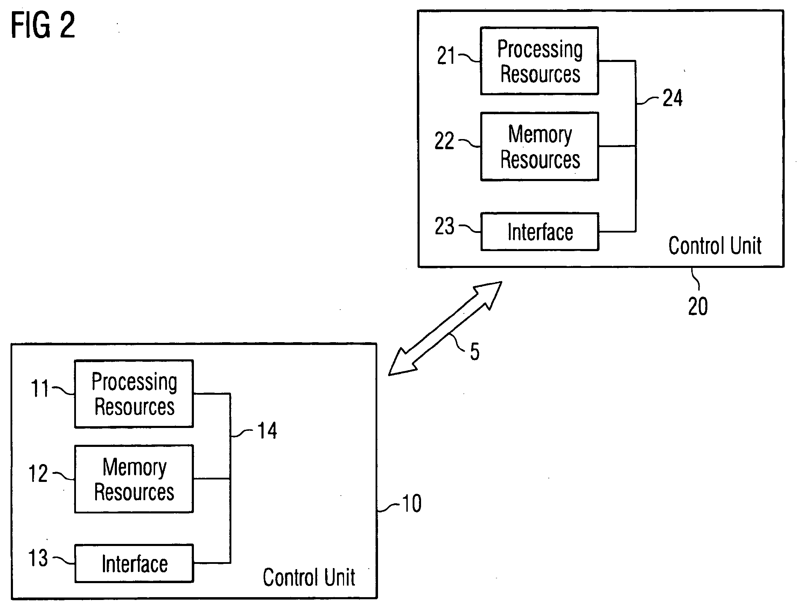

As a preliminary matter before exploring details of various implementations, reference is made to Fig. 2 for illustrating a simplified block diagram of various electronic devices that are suitable for use in practicing the exemplary embodiments of this invention.

A control unit 10 includes processing resources 11, memory resources 12 that may store a program, and interfaces 13 that may include a suitable RF transceiver coupled to one or more antennas (not shown) for bidirectional wireless communications over one or more wireless links 5 with a control unit 20. The processing resources 11, memory resources 12 and interfaces 13 are coupled by a link 14.

The control unit 10 may be part of a user equipment, and the control unit 20 may be part of a cellular communications network, for example a base node of the cellular communications network.

The control unit 20 includes processing resources 21, memory resources 22 that may store a program, and interfaces 23 that may include a suitable RF transceiver coupled to one or more antennas (not shown) for bidirectional wireless communications over one or more wireless links 5 with the control unit 10. The processing resources 21, memory resources 22 and interfaces 23 are coupled by a link 24.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

At least one of the programs stored in the memory resources 12, 22 is assumed to include program instructions that, when executed by the associated processing resources, enable the control unit to operate in accordance with the exemplary embodiments of this invention, as detailed below. Inherent in the processing resources 11, 21 is a clock to enable synchronism among the various apparatus for transmissions and receptions within the appropriate time intervals and slots required, as the scheduling grants and the granted resources/subframes are time dependent. The transceivers include both transmitter and receiver, and inherent in each is a modulator/demodulator commonly known as a modem. The processing resources 21 also are assumed to each include a modem to facilitate communication over (hardwire) links which may be included in the interfaces 23 for communications between the control unit 20 and other network nodes.

In general, the exemplary embodiments of this invention may be implemented by computer software stored in the memory resources 12 and executable by the processing resources 11 of the control unit 10 and similar for the other memory resources 22 and processing resources 21 of the control unit 20, or by hardware, or by a combination of software and/or firmware and hardware in any or all of the devices shown.

In general, the control unit 10 may be applied in a UE which may comprise, but is not limited to, mobile stations, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The memory resources 12, 22 may be of any type suitable to the local technical environment and may be implemented using any suitable data storage technology, such as semiconductor-based memory devices, magnetic memory devices and systems, optical memory devices and systems, fixed memory and removable memory. The processing resources 11,21 may be of any type suitable to the local technical environment, and may include one or more of general purpose computers, special purpose computers, microprocessors, digital signal processors and processors based on a multi-core processor architecture, as non-limiting examples.

According to an embodiment of the invention, a location specific measurement configuration map is used by the control unit 10 of a UE in a cellular communications network to adopt different measurement event parameters at different locations of the UE in the cellular communications network, in particular at different locations within a cell of the cellular communications network, for measurement event reporting. BCHs may be used to provide this map from the network, e.g. using the control unit 20, to the control unit 10.

This approach basically comprises two aspects:
1. The control unit 10, e.g. the processing resources 11 using the memory resources 12, updates autonomously its measurement IDs based on the measurement configuration map which may be received via a BCH using the interfaces 13, depending on the location of the UE.
2. The measurement configuration map is generated or updated by incorporating location information in the root cause analysis and generating statistics of the different failure categories (so-called KPI statistics).

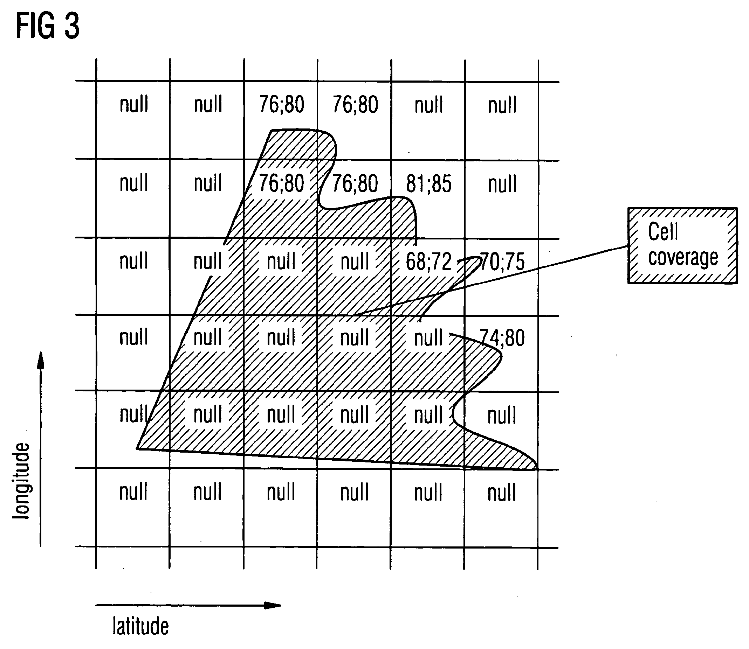

With respect to the first aspect, according to an embodiment of the invention, the measurement configuration map used by the UE and provided by the BCH comprises, as exemplarily depicted in Fig. 3, a grid of location data (e.g. longitude, latitude) where each raster field (area) has assigned either dedicated measurement configuration parameters or "null" indicating that a default setting is used. Measurement configuration is typically provided by a RRC connection reconfiguration message consisting of measurement object and reporting configuration where , for instance, in case of event based reporting the criterion for the event is specified. In Fig. 3, the two thresholds of dual threshold event like B2 (serving cell signal should be below threshold 1 and neighboring cell signal strength should be above threshold 2) are depicted, i.e. 76;80 means threshold 1 is 76 and threshold 2 is 80 for a specific location area..

Fig. 3 shows an example of a location specific measurement configuration map to be used by the control unit 10 for measurement event reporting to the cellular communications network. A dotted area in Fig. 3 represents a cell coverage. The control unit 10, e.g. the processing resources 11 using the memory resources 12, is regularly monitoring its location data and updates reporting configuration settings of its measurement IDs according to the configuration map, i.e. if the UE changes the raster field (area) it must change its reporting configuration according to the new thresholds. This helps to ensure that handover is properly triggered in time in each situation.

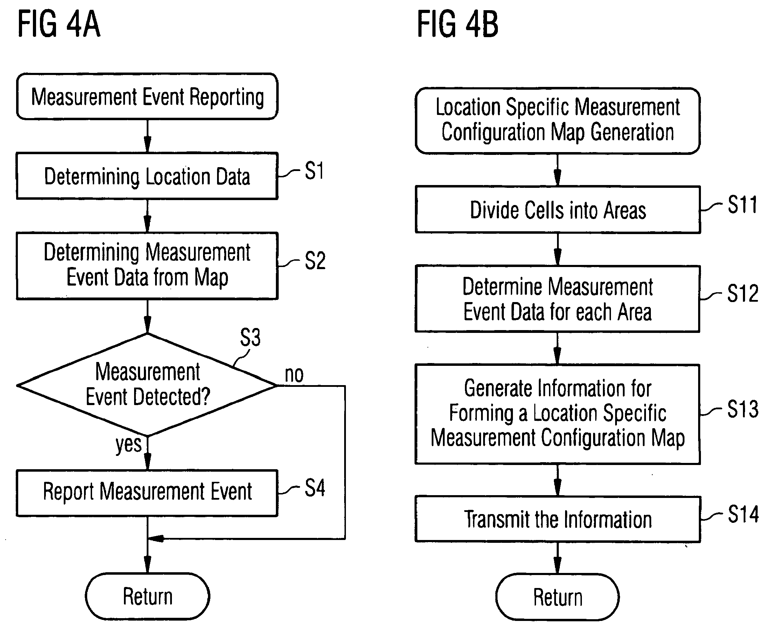

Fig. 4A shows a flowchart illustrating a measurement event reporting process according to an embodiment of the invention.

In step S1, location data of a UE in a cellular communications network is determined. For example, the processing resources 11 using the memory resources 12 and interfaces 13 may determine the location data of the UE including the control unit 10.

In step S2, based on the determined location data, measurement event data for triggering a measurement event is derived from a map associating location data with measurement event data for each area of a cell of the cellular communications network. The measurement configuration map as shown in Fig. 3 may be used for this purpose. For example, the processing resources 11 using the memory resources 12 may derive the measurement event data (measurement configuration parameters) from the map.

In step S3 it is decided whether or not the measurement event is detected, based on the derived measurement event data. This decision may be done by the processing resources 11 using the memory resources 12 and the interfaces 13.

In step S4, in case the measurement event has been detected (yes in step S3), the measurement event is reported. For example, the processing resources using the memory resources 12 report the measurement event through the interfaces 13 to the cellular communications network, e.g. the control unit 20, via the links 5.

Fig. 4B shows a flowchart illustrating a process of a location specific measurement configuration map generation according to an embodiment of the invention.

In step S11, cells of a cellular communications network are divided into a plurality of areas, e.g. resulting in the grid as shown in Fig. 3.

In step S12, for each area, measurement event data is determined, wherein the measurement event data trigger a measurement event in a user equipment, and when the measurement event is detected by the user equipment based on the measurement event data, the measurement event is reported by the user equipment, e.g. as described with respect to Fig. 4A.

In step S13, map forming data for forming a map associating location data of the user equipment with the measurement event data is generated. For example, the processing resources 21 using the memory resources 22 perform the division, determination and generation of steps S11-S13.

In step S14, the map forming data is transmitted e.g. by the interfaces 23 and links 5.

The measurement event data may be determined for different user equipment speeds. The measurement event data may comprise dedicated measurement event data (e.g. 76;80 as described above) and an information item (e.g. "null" as shown in Fig. 3) indicating that default measurement event data are to be used, wherein each area and/or user equipment speed has assigned either one of the dedicated measurement event data or the information item.

The map forming data may comprise the dedicated measurement event data for each area and/or user equipment speed requiring handling different from a default handling. Alternatively, the map forming data may comprise the dedicated measurement event data for each area and/or user equipment speed requiring handling different from a default handling and the information item for each area and/or user equipment speed requiring default handling.

The map forming data may be transmitted via a broadcast channel. Alternatively or in addition, the map forming data may be transmitted by a serving node in a cell when the user equipment becomes active in the cell or enters the cell by means of a handover.

With respect to the above-mentioned second aspect, according to an embodiment of the invention, an MRO algorithm analyzes a mobility error based on RLF reports reported by the control unit 10 of the UE when the UE is newly re-connected (or re-established, respectively) after experiencing a RLF or HOF.

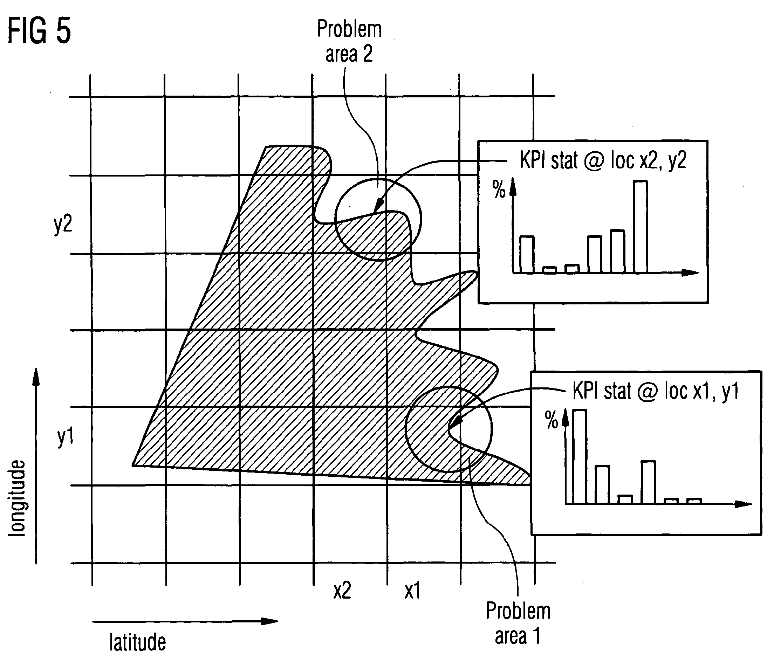

As proposed in document [4], an RLF report should be extended with location information which helps to evaluate the KPI statistics in more detail with respect to location information. Thus, it can be distinguished, for instance, that in one area of one and the same cell failures due to "too late handover" are dominating while in another area failures due to "too early handover" are the problem. This is depicted in Fig. 5 where different KPI statistics are detected for different handover areas in a cell. The KPI statistics are analyzed location-specifically and those belonging to one cell are compared against each other (e.g. by correlation of histograms). If they are all similar one common cell-specific setting is sufficient and a location specific configuration map is not necessary. In the other case, if they indicate completely different problems at specific locations a location specific configuration map is generated and may be provided by the BCH, as described above.

According to a process of a location specific measurement configuration map generation of an embodiment of the invention, on the network side measurement events are received from UEs of the cellular communications network. In addition to the measurement events, also location data may be received from the UEs. For example, the control unit 20 receives the measurement event reported from the control unit 10 and location data of the UE comprising the control unit 10 via the links 5 through the interfaces 23.

A root cause analysis is performed in which the location data is incorporated. In this root cause analysis statistics of different failure categories (i.e. KPI statistics) is generated. The root cause analysis may be performed by the processing resources 21 using the memory resources 22 and (hardwire) links of the interfaces 23. Information for forming a location specific measurement configuration map is generated or updated. This operation may be performed by the processing resources 21 using the memory resources 22.The information is transmitted e.g. to the control unit 10 through the interfaces 23 via the links 5. This information may be used by the processing resources 11 of the control unit 10 of the UE to form the location specific measurement configuration map.

In addition, as described above, the measurement reporting configuration parameters (measurement event parameters) may be also adapted to speed of the UE which can be derived from GPS data and/or from an evaluation of UE history information. In this case, the measurement reporting configuration parameters are location and speed specific and the map is extended by a further dimension.

KPI statistics means that all relevant mobility problems (e.g. too late, too early, etc.) are taken into account in contrast to the prior art in which only HO to wrong cells or short stays are considered. Each bar of the KPI histograms depicted in Fig. 5 represents the probability of occurrence of a certain problem, e.g. too late HO.

The form of the histograms given by dominating bars indicating a specified failure type determines how mobility parameters have to be changed. This also leads to different parameter settings for two different problem areas of the cell shown in Fig. 5. That is, referring also to Fig. 3, for locations in the area of raster field x1, y1, default parameters are to be used for reporting the measurement event, while for locations in the area of raster field x2, y2 parameters 76;80 are to be used. The dotted area show in Fig. 5 depicts the cell coverage.

According to an embodiment, the measurement configuration map is updated with the above parameter settings and finally broadcasted to the UEs connected to the cell.

According to an embodiment of the invention, instead of location information itself UEs may apply RF fingerprinting techniques, i.e. measurement of relative power towards different x strongest cells. Instead of the location itself the UEs report the relative power values and cell IDs. This has the benefit that it is backward compatible reusing available RSRP measurements and avoiding the need for location aware UEs. For a broadcast message transmitted in the BCH (i.e. transmitted measurement configuration map or information for forming such map), RF fingerprints are used as well, either as only means or in addition to location information.

Moreover, for reducing reporting and broadcasting overhead, broadcast messages may provide only information for those locations or RF fingerprints having a variation to standard HO parameters (default parameters). This assumes that there are only few areas of a cell which needs special attention. In this respect, HO parameters may be adapted or changed only for the x, e.g. 2 or 3, most critical areas of the cell. In addition, delta messages may be used relative to the standard HO parameters.

According to an embodiment of the invention, eNBs (base nodes) may track further HO behaviour of UEs like time to next HO or fall back HO (ping pong), etc. Based on this information eNBs are able to detect after evaluation of such KPIs over long time for certain areas preferred cells for HO, which may be given in the broadcast messages as well.

Furthermore, from previous messages - or UE internal tracking - direction of movements of UEs may be derived. In addition to the location itself direction of movement may be a further parameter to define optimum HO parameters. Most prominent may be a best fitting cell ID for a HO.

It is also possible to take into account neighbor cell load information for generating the location specific measurement configuration map or information for forming such map, delaying e.g. HO into overloaded cells.

According to an embodiment of the invention, as described above, instead of using the broadcast channel for transmitting the location specific measurement configuration map or the information for forming such map, the UE (e.g. the control unit 10 of the UE), when becoming active in a cell or entering the cell by HO gets configured by a serving radio node (e.g. the control unit 20) with a set of measurement configurations. Each of these measurement configurations contains location information that determines the validity of each of these individual measurement configurations. If none of these special configurations are valid or in case location features are currently deactivated or unavailable then a default measurement configuration is used.

According to an implementation example, the measurement configuration map is included as an IE of broadcast information or alternatively location information is included in information elements (IEs) of a measurement configuration that determine a validity area of the measurement configuration.

According to an aspect of the invention, an apparatus, e.g. the control unit 10, comprises first means for determining location data of a user equipment in a cellular communications network, second means for, based on the determined location data, deriving measurement event data for triggering a measurement event, from a map associating location data with measurement event data for each area of a cell of the cellular communications network, and third means for, when the measurement event is detected based on the derived measurement event data, reporting the measurement event. The first to third means may be implemented by the processing resources 11, the memory resources 12 and the interfaces 13.

The map may further associate speed data with the measurement event data, and the apparatus may comprise fourth means for determining speed data of the user equipment, wherein the second means, based on the determined location data and the determined speed data, derives measurement event data for triggering the measurement event from the map. The fourth means may be implemented by the processing resources 11, the memory resources 12 and the interfaces 13.

The measurement event data may comprise dedicated measurement event data and an information item indicating that default measurement event data are to be used, wherein in the map each location data and/or speed data has assigned either one of the dedicated measurement event data or the information item.

The location data may comprise location information and/or radio frequency fingerprints.

The apparatus may comprise fifth means for receiving map forming data for forming the map from a broadcast channel, or receiving map forming data for forming the map from a serving node in the cell when the user equipment becomes active in the cell or enters the cell by means of a handover. The fifth means may be implemented by the processing resources 11, the memory resources 12 and the interfaces 13.

The map forming data may comprise the dedicated measurement event data for location data and/or speed data requiring handling different from a default handling, or the map forming data may comprise the dedicated measurement event data for location data and/or speed data requiring handling different from a default handling and the information item for each location data and/or each speed data requiring default handling.

The apparatus may further comprise sixth means for reporting the determined location data and/or the determined speed data together with the measurement event. The sixth means may be implemented by the processing resources 11, the memory resources 12 and the interfaces 13.

According to an aspect of the invention, an apparatus, e.g. the control unit 20, comprises means for dividing cells of a cellular communications network into a plurality of areas, means for, for each area, determining measurement event data, wherein the measurement event data trigger a measurement event in a user equipment, and when the measurement event is detected by the user equipment based on the measurement event data, the measurement event is reported by the user equipment, means for generating map forming data for forming a map associating location data of the user equipment with the measurement event data, and means for transmitting the map forming data. The dividing means, determining means, generating means and transmitting means may be implemented by the processing resources 21, the memory resources 22 and the interfaces 23.

The determining means may further determine measurement event data for different user equipment speeds.

The measurement event data may comprise dedicated measurement event data and an information item indicating that default measurement event data are to be used, wherein each area and/or user equipment speed has assigned either one of the dedicated measurement event data or the information item.

The map forming data may comprise the dedicated measurement event data for each area and/or user equipment speed requiring handling different from a default handling, or wherein the map forming data comprises the dedicated measurement event data for each area and/or user equipment speed requiring handling different from a default handling and the information item for each area and/or user equipment speed requiring default handling.

The transmitting means may transmit the map forming data via a broadcast channel, or by a serving node in a cell when the user equipment becomes active in the cell or enters the cell by means of a handover.

The determining means may determine the measurement event data based on reported measurement events and location data and/or speed data of user equipments.

According to an aspect of the invention, cells of a cellular communications network are divided into a plurality of areas. For each area, measurement event data is determined, wherein the measurement event data trigger a measurement event in a user equipment, and when the measurement event is detected by the user equipment based on the measurement event data, the measurement event is reported by the user equipment. Map forming data is generated for forming a map associating location data of the user equipment with the measurement event data, and the map forming data is transmitted. A user equipment in the cellular communications network determines location data and, based on the determined location data, derives measurement event data for triggering the measurement event, from the map. When the measurement event is detected based on the derived measurement event data, the user equipment reports the measurement event.

It is to be understood that the above description is illustrative of the invention and is not to be construed as limiting the invention. Various modifications and applications may occur to those skilled in the art without departing from the scope of the invention as defined by the appended claims.

## Claims

1. A method comprising:
determining (S1) location data of a user equipment in a cellular communications network, by the user equipment, wherein the location data comprises frequency fingerprints;
deriving (S2) by the user equipment based on the determined location data, from a map received from the network, the map associating location data with measurement event data for each area of a cell of the cellular communications network, measurement event data for triggering a measurement event, the measurement event data relating to measurement configuration parameters used for a handover; and
reporting (S4) the measurement event when the measurement event is detected (S3) based on the derived measurement event data.

2. The method of claim 1, wherein the map further associates speed data with the measurement event data, the method comprising:
determining speed data of the user equipment; and
based on the determined location data and the determined speed data, deriving measurement event data for triggering the measurement event from the map.

3. The method of claim 1 or 2, wherein the measurement event data comprise dedicated measurement event data and an information item indicating that default measurement event data are to be used, wherein in the map each location data and/or speed data has assigned either one of the dedicated measurement event data or the information item.

4. The method of any one of claims 1 to 3, wherein the location data comprises location information.

5. The method of any one of claims 1 to 4, comprising:
receiving map forming data for forming the map from a broadcast channel, or
receiving map forming data for forming the map from a serving node in the cell when the user equipment becomes active in the cell or enters the cell by means of a handover.

6. The method of claim 3 when dependent on claim 2, wherein the map forming data comprise the dedicated measurement event data for location data and/or speed data requiring handling different from a default handling, or wherein the map forming data comprises the dedicated measurement event data for location data and/or speed data requiring handling different from a default handling and the information item for each location data and/or each speed data requiring default handling.

7. The method of any one of claims 1 to 6, further comprising:
reporting the determined location data and/or the determined speed data together with the measurement event.

8. A method comprising:
dividing cells of a cellular communications network into a plurality of areas (S11), by a base station,
determining (S12) by the base station for each area, measurement event data, the measurement event data relating to measurement configuration parameters used for a handover, wherein the measurement event data trigger a measurement event in a user equipment, and when the measurement event is detected by the user equipment based on the measurement event data, the measurement event is reported by the user equipment;
generating (S13) map forming data for forming a map associating location data of the user equipment with the measurement event data by the base station, wherein the location data comprises frequency fingerprints; and
transmitting (S14) by the base station, the map forming data.

9. The method of claim 8, comprising:
determining measurement event data for different user equipment speeds.

10. The method of claim 8 or 9, wherein the measurement event data comprise dedicated measurement event data and an information item indicating that default measurement event data are to be used, wherein each area and/or user equipment speed has assigned either one of the dedicated measurement event data or the information item.

11. The method of claim 10, wherein the map forming data comprise the dedicated measurement event data for each area and/or user equipment speed requiring handling different from a default handling, or wherein the map forming data comprises the dedicated measurement event data for each area and/or user equipment speed requiring handling different from a default handling and the information item for each area and/or user equipment speed requiring default handling.

12. The method of any one of claims 8 to 11, comprising:
transmitting the map forming data via a broadcast channel, or
transmitting the map forming data by a serving node in a cell when the user equipment becomes active in the cell or enters the cell by means of a handover.

13. The method of any one of claims 8 to 12, comprising:
determining the measurement event data based on reported measurement events and location data and/or speed data of user equipments.

14. A control unit (10) of a user equipment, configured to:
determine location data of a user equipment in a cellular communications network, wherein the location data comprises frequency fingerprints;
derive, based on the determined location data, from a map received from the network, the map associating location data with measurement event data for each area of a cell of the cellular communications network, measurement event data for triggering a measurement event, the measurement event data relating to measurement configuration parameters used for a handover; and
when the measurement event is detected based on the derived measurement event data, report the measurement event.

15. The control unit (10) of claim 14, wherein the map further associates speed data with the measurement event data, the control unit configured to:
determine speed data of the user equipment; and
based on the determined location data and the determined speed data, determine measurement event data for triggering the measurement event from the map.

16. The control unit (10) of claim 14 or 15, configured to:
receive map forming data for forming the map from a broadcast channel, or
receive map forming data for forming the map from a serving node in the cell when the user equipment becomes active in the cell or enters the cell by means of a handover.

17. A control unit (20) of a base station, configured to:
divide cells of a cellular communications network into a plurality of areas,
determine for each area measurement event data, wherein the measurement event data trigger a measurement event in a user equipment, the measurement event data relating to measurement configuration parameters used for a handover, and when the measurement event is detected by the user equipment based on the measurement event data, the measurement event is reported by the user equipment;
generate map forming data for forming a map associating location data of the user equipment with the measurement event data, wherein the location data comprises frequency fingerprints; and
transmit the map forming data.

18. The control unit (20) of claim 17, configured to:
determine measurement event data for different user equipment speeds.

19. The control unit (20) of claim 17 or 18, configured to:
transmit the map forming data via a broadcast channel, or
transmit the map forming data by a serving node in a cell when the user equipment becomes active in the cell or enters the cell by means of a handover.

## Patentansprüche

1. Verfahren, das Folgendes umfasst:
Bestimmen (S1) von Ortsdaten eines Anwendergeräts in einem Mobilkommunikationsnetz durch das Anwendergerät, wobei die Ortsdaten Frequenzfingerabdrücke umfassen;
Ableiten (S2) durch das Anwendergerät anhand der bestimmten Ortsdaten aus einer Karte, die von dem Netz empfangen wurde, wobei die Karte für jeden Bereich einer Zelle des Mobilkommunikationsnetzes den Messereignisdaten Ortsdaten zuordnet, von Messereignisdaten zum Auslösen eines Messereignisses, wobei sich die Messereignisdaten auf Messkonfigurationsparameter beziehen, die für eine Übergabe verwendet werden; und
Melden (S4) des Messereignisses, wenn das Messereignis anhand der abgeleiteten Messereignisdaten detektiert wird (S3).

2. Verfahren nach Anspruch 1, wobei die Karte den Messereignisdaten ferner Geschwindigkeitsdaten zuordnet, wobei das Verfahren Folgendes umfasst:
Bestimmen von Geschwindigkeitsdaten des Anwendergeräts; und
Ableiten von Messereignisdaten anhand der bestimmten Ortsdaten und der bestimmten Geschwindigkeitsdaten, um das Messereignis aus der Karte abzuleiten.

3. Verfahren nach Anspruch 1 oder 2, wobei die Messereignisdaten bestimmte Messereignisdaten und ein Informationselement, das angibt, dass die Standardmessereignisdaten zu verwenden sind, umfassen, wobei in der Karte jeweiligen Ortsdaten und/oder Geschwindigkeitsdaten entweder die bestimmten Messereignisdaten oder das Informationselement zugeordnet ist.

4. Verfahren nach einem der Ansprüche 1 bis 3, wobei die Ortsdaten Ortsinformationen umfassen.

5. Verfahren nach einem der Ansprüche 1 bis 4, das Folgendes umfasst:
Empfangen von Kartenerzeugungsdaten zum Erzeugen der Karte von einem Sendekanal oder
Empfangen von Kartenerzeugungsdaten zum Erzeugen der Karte von einem Dienstknoten in der Zelle, wenn das Anwendergerät in der Zelle aktiv wird oder durch eine Übergabe in die Zelle eintritt.

6. Verfahren nach Anspruch 3, wenn abhängig von Anspruch 2, wobei die Kartenerzeugungsdaten die bestimmten Messereignisdaten für Ortsdaten und/oder Geschwindigkeitsdaten, die eine von einer Standardbearbeitung verschiedene Bearbeitung benötigen, umfassen oder wobei die Kartenerzeugungsdaten die bestimmten Messereignisdaten für Ortsdaten und/oder Geschwindigkeitsdaten, die eine von einer Standardbearbeitung verschiedene Bearbeitung benötigen, und das Informationselement für jede Ortsdaten und/oder Geschwindigkeitsdaten, die eine Standardbearbeitung benötigen, umfassen.

7. Verfahren nach einem der Ansprüche 1 bis 6, das ferner Folgendes umfasst:
Melden der bestimmten Ortsdaten und/oder der bestimmten Geschwindigkeitsdaten zusammen mit dem Messereignis.

8. Verfahren, das Folgendes umfasst:
Aufteilen von Zellen eines Mobilkommunikationsnetzes in mehrere Bereiche (S11) durch eine Basisstation,
Bestimmen (S12) von Messereignisdaten durch die Basisstation für jeden Bereich, wobei sich die Messereignisdaten auf Messkonfigurationsparameter beziehen, die für eine Übergabe verwendet werden, wobei die Messereignisdaten ein Messereignis in einem Anwendergerät auslösen, und dann, wenn das Messereignis durch das Anwendergerät anhand der Messereignisdaten detektiert wird, das Messereignis durch das Anwendergerät gemeldet wird;
Erzeugen (S13) von Kartenerzeugungsdaten zum Erzeugen einer Karte, die den Messereignisdaten Ortsdaten des Anwendergeräts zuordnet, durch die Basisstation, wobei die Ortsdaten Frequenzfingerabdrücke umfassen; und
Senden (S14) der Kartenerzeugungsdaten durch die Basisstation.

9. Verfahren nach Anspruch 8, das Folgendes umfasst:
Bestimmen von Messereignisdaten für verschiedene Anwendergerätgeschwindigkeiten.

10. Verfahren nach Anspruch 8 oder 9, wobei die Messereignisdaten bestimmte Messereignisdaten und ein Informationselement, das angibt, dass Standardmessereignisdaten zu verwenden sind, umfassen, wobei jedem Bereich und/oder jeder Anwendergerätgeschwindigkeit entweder die bestimmten Messereignisdaten oder das Informationselement zugeordnet ist.

11. Verfahren nach Anspruch 10, wobei die Kartenerzeugungsdaten die bestimmten Messereignisdaten für jeden Bereich und/oder jede Anwendergerätgeschwindigkeit, die eine von einer Standardbearbeitung verschiedene Bearbeitung benötigen, umfassen oder wobei die Kartenerzeugungsdaten die bestimmten Messereignisdaten für jeden Bereich und/oder jede Anwendergerätgeschwindigkeit, die eine von einer Standardbearbeitung verschiedene Bearbeitung benötigen, und das Informationselement für jeden Bereich und/oder jede Anwendergerätgeschwindigkeit, die eine Standardbearbeitung benötigen, umfassen.

12. Verfahren nach einem der Ansprüche 8 bis 11, das Folgendes umfasst:
Senden der Kartenerzeugungsdaten über einen Sendekanal oder
Senden der Kartenerzeugungsdaten durch einen Dienstknoten in einer Zelle, wenn das Anwendergerät in der Zelle aktiv wird oder durch eine Übergabe in die Zelle eintritt.

13. Verfahren nach einem der Ansprüche 8 bis 12, das Folgendes umfasst:
Bestimmen der Messereignisdaten anhand von gemeldeten Messereignissen und Ortsdaten und/oder Geschwindigkeitsdaten von Anwendergeräten.

14. Steuereinheit (10) eines Anwendergeräts, das konfiguriert ist:
Ortsdaten eines Anwenderendgeräts in einem Mobilkommunikationsnetz zu bestimmen, wobei die Ortsdaten Frequenzfingerabdrücke umfassen;
Messereignisdaten zum Auslösen eines Messereignisses anhand der bestimmten Ortsdaten aus einer Karte abzuleiten, die von dem Netz empfangen wurde, wobei die Karte für jeden Bereich einer Zelle des Mobilkommunikationsnetzes den Messereignisdaten Ortsdaten zuordnet, wobei sich die Messereignisdaten auf Messkonfigurationsparameter beziehen, die für eine Übergabe verwendet werden; und
dann, wenn das Messereignis anhand der abgeleiteten Messereignisdaten detektiert wird, das Messereignis zu melden.

15. Steuereinheit (10) nach Anspruch 14, wobei die Karte den Messereignisdaten ferner Geschwindigkeitsdaten zuordnet, wobei die Steuereinheit konfiguriert ist:
Geschwindigkeitsdaten des Anwenderendgeräts zu bestimmen; und
anhand der bestimmten Ortsdaten und der bestimmten Geschwindigkeitsdaten, Messereignisdaten zum Auslösen des Messereignisses aus der Karte zu bestimmen.

16. Steuereinheit (10) nach Anspruch 14 oder 15, die konfiguriert ist:
Kartenerzeugungsdaten zum Erzeugen der Karte von einem Sendekanal zu empfangen oder
Kartenerzeugungsdaten zum Erzeugen der Karte von einem Dienstknoten in der Zelle zu empfangen, wenn das Anwendergerät in der Zelle aktiv wird oder durch eine Übergabe in die Zelle eintritt.

17. Steuereinheit (20) einer Basisstation, die konfiguriert ist:
Zellen eines Mobilkommunikationsnetzes in mehrere Bereiche aufzuteilen,
für jeden Bereich Messereignisdaten zu bestimmen, wobei die Messereignisdaten ein Messereignis in einem Anwendergerät auslösen, wobei sich die Messereignisdaten auf Messkonfigurationsparameter beziehen, die für eine Übergabe verwendet werden, und dann, wenn das Messereignis durch das Anwendergerät anhand der Messereignisdaten detektiert wird, das Messereignis durch das Anwendergerät gemeldet wird;
Kartenerzeugungsdaten zum Erzeugen einer Karte, die den Messereignisdaten Ortsdaten des Anwendergeräts zuordnet, zu erzeugen, wobei die Ortsdaten Frequenzfingerabdrücke umfassen; und
die Kartenerzeugungsdaten zu senden.

18. Steuereinheit (20) nach Anspruch 17, die konfiguriert ist:
Messereignisdaten für verschiedene Anwendergerätgeschwindigkeiten zu bestimmen.

19. Steuereinheit (20) nach Anspruch 17 oder 18, die konfiguriert ist:
die Kartenerzeugungsdaten über einen Sendekanal zu senden oder
die Kartenerzeugungsdaten durch einen Dienstknoten in einer Zelle zu senden, wenn das Anwendergerät in der Zelle aktiv wird oder durch eine Übergabe in die Zelle eintritt.

## Revendications

1. Un procédé comprenant :
la détermination (S1) de données de localisation d'un équipement d'utilisateur dans un réseau de communication cellulaire par l'équipement d'utilisateur, les données de localisation comprenant des empreintes de fréquence,
la dérivation (S2) par l'équipement d'utilisateur en fonction des données de localisation déterminées, à partir d'une carte reçue à partir du réseau, de la carte associant des données de localisation à des données d'événements de mesure pour chaque zone d'une cellule du réseau de communication cellulaire, des données d'événements de mesure destinées au déclenchement d'un événement de mesure, les données d'événements de mesure portant sur des paramètres de configuration de mesure utilisés pour un transfert, et
le signalement (S4) de l'événement de mesure lorsque l'événement de mesure est détecté (S3) en fonction des données d'événements de mesure dérivées.

2. Le procédé selon la revendication 1, dans lequel la carte associe en outre des données de vitesse aux données d'événements de mesure, le procédé comprenant :
la détermination de données de vitesse de l'équipement d'utilisateur, et
en fonction des données de localisation déterminées et des données de vitesse déterminées, la dérivation de données d'événements de mesure destinées au déclenchement de l'événement de mesure à partir de la carte.

3. Le procédé selon la revendication 1 ou 2, dans lequel les données d'événements de mesure comprennent des données d'événements de mesure dédiées et un élément d'information indiquant que des données d'événements de mesure par défaut doivent être utilisées, où, dans la carte, à chaque donnée de localisation et/ou donnée de vitesse est attribué un élément parmi les données d'événements de mesure dédiées ou l'élément d'information.

4. Le procédé selon l'une quelconque des revendications 1 à 3, dans lequel les données de localisation comprennent des informations de localisation.

5. Le procédé selon l'une quelconque des revendications 1 à 4, comprenant :
la réception de données de formation de carte destinées à la formation de la carte à partir d'un canal de diffusion, ou
la réception de données de formation de carte destinées à la formation de la carte à partir d'un noeud de desserte dans la cellule lorsque l'équipement d'utilisateur devient actif dans la cellule ou entre dans la cellule au moyen d'un transfert.

6. Le procédé selon la revendication 3, lorsqu'elle dépend de la revendication 2, dans lequel les données de formation de carte comprennent les données d'événements de mesure dédiées pour des données de localisation et/ou des données de vitesse exigeant une manipulation différente d'une manipulation par défaut, ou dans lequel les données de formation de carte comprennent les données d'événements de mesure dédiées pour des données de localisation et/ou des données de vitesse exigeant une manipulation différente d'une manipulation par défaut et l'élément d'information pour chaque donnée de localisation et/ou chaque donnée de vitesse exigeant une manipulation par défaut.

7. Le procédé selon l'une quelconque des revendications 1 à 6, comprenant en outre :
le signalement des données de localisation déterminées et/ou des données de vitesse déterminées conjointement avec l'événement de mesure.

8. Un procédé comprenant :
la division de cellules d'un réseau de communication cellulaire en une pluralité de zones (S11) par une station de base,
la détermination (S12) par la station de base, pour chaque zone, de données d'événements de mesure, les données d'événements de mesure portant sur des paramètres de configuration de mesure utilisés pour un transfert, les données d'événements de mesure déclenchant un événement de mesure dans un équipement d'utilisateur, et, lorsque l'événement de mesure est détecté par l'équipement d'utilisateur en fonction des données d'événements de mesure, l'événement de mesure est signalé par l'équipement d'utilisateur,
la génération (S13) de données de formation de carte destinées à la formation d'une carte associant des données de localisation de l'équipement d'utilisateur aux données d'événements de mesure par la station de base, les données de localisation comprenant des empreintes de fréquence, et
la transmission (S14), par la station de base, des données de formation de carte.

9. Le procédé selon la revendication 8, comprenant :
la détermination de données d'événements de mesure pour des vitesses d'équipement d'utilisateur différentes.

10. Le procédé selon la revendication 8 ou 9, dans lequel les données d'événements de mesure comprennent des données d'événements de mesure dédiées et un élément d'information indiquant que des données d'événements de mesure par défaut doivent être utilisées, dans lequel, à chaque zone et/ou vitesse d'équipement d'utilisateur est attribué un élément parmi les données d'événements de mesure dédiées ou l'élément d'information.

11. Le procédé selon la revendication 10, dans lequel les données de formation de carte comprennent les données d'événements de mesure dédiées pour chaque zone et/ou vitesse d'équipement d'utilisateur exigeant une manipulation différente d'une manipulation par défaut, ou les données de formation de carte comprenant les données d'événements de mesure dédiées pour chaque zone et/ou vitesse d'équipement d'utilisateur exigeant une manipulation différente d'une manipulation par défaut et l'élément d'information pour chaque zone et/ou vitesse d'équipement d'utilisateur exigeant une manipulation par défaut.

12. Le procédé selon l'une quelconque des revendications 8 à 11, comprenant :
la transmission des données de formation de carte par l'intermédiaire d'un canal de diffusion, ou
la transmission des données de formation de carte par un noeud de desserte dans une cellule lorsque l'équipement d'utilisateur devient actif dans la cellule ou entre dans la cellule au moyen d'un transfert.

13. Le procédé selon l'une quelconque des revendications 8 à 12, comprenant :
la détermination des données d'événements de mesure en fonction d'événements de mesure signalés et de données de localisation et/ou de données de vitesse d'équipements d'utilisateur.

14. Une unité de commande (10) d'un équipement d'utilisateur configurée de façon à :
déterminer des données de localisation d'un équipement d'utilisateur dans un réseau de communication cellulaire, les données de localisation comprenant des empreintes de fréquence,
dériver, en fonction des données de localisation déterminées, à partir d'une carte reçue à partir du réseau, la carte associant des données de localisation à des données d'événements de mesure pour chaque zone d'une cellule du réseau de communication cellulaire, des données d'événements de mesure destinées au déclenchement d'un événement de mesure, les données d'événements de mesure portant sur des paramètres de configuration de mesure utilisés pour un transfert, et
lorsque l'événement de mesure est détecté en fonction des données d'événements de mesure dérivées, signaler l'événement de mesure.

15. L'unité de commande (10) selon la revendication 14, dans laquelle la carte associe en outre des données de vitesse aux données d'événements de mesure, l'unité de commande étant configurée de façon à :
déterminer des données de vitesse de l'équipement d'utilisateur, et
en fonction des données de localisation déterminées et des données de vitesse déterminées, déterminer des données d'événements de mesure destinées au déclenchement de l'événement de mesure à partir de la carte.

16. L'unité de commande (10) selon la revendication 14 ou 15, configurée de façon à :
recevoir des données de formation de carte destinées à la formation de la carte à partir d'un canal de diffusion, ou
recevoir des données de formation de carte destinées à la formation de la carte à partir d'un noeud de desserte dans la cellule lorsque l'équipement d'utilisateur devient actif dans la cellule ou entre dans la cellule au moyen d'un transfert.

17. Une unité de commande (20) d'une station de base configurée de façon à :
diviser des cellules d'un réseau de communication cellulaire en une pluralité de zones,
déterminer pour chaque zone des données d'événements de mesure, les données d'événements de mesure déclenchant un événement de mesure dans un équipement d'utilisateur, les données d'événements de mesure portant sur des paramètres de configuration de mesure utilisés pour un transfert, et, lorsque l'événement de mesure est détecté par l'équipement d'utilisateur en fonction des données d'événements de mesure, l'événement de mesure est signalé par l'équipement d'utilisateur,
générer des données de formation de carte destinées à la formation d'une carte associant des données de localisation de l'équipement d'utilisateur aux données d'événements de mesure, les données de localisation comprenant des empreintes de fréquence, et
transmettre les données de formation de carte.

18. L'unité de commande (20) selon la revendication 17 configurée de façon à :
déterminer des données d'événements de mesure pour des vitesses d'équipement d'utilisateur différentes.

19. L'unité de commande (20) selon la revendication 17 ou 18, configurée de façon à :
transmettre les données de formation de carte par l'intermédiaire d'un canal de diffusion, ou
transmettre les données de formation de carte par un noeud de desserte dans une cellule lorsque l'équipement d'utilisateur devient actif dans la cellule ou entre dans la cellule au moyen d'un transfert.
